# EUROPEAN PATENT APPLICATION

(11) **EP 3 547 173 A1**
(43) Date of publication of application: **02.10.2019**
(21) Application number: 18164784.3
(22) Date of filing: 28.03.2018
(51) Int. Cl.: G06F 17/50, G06Q 10/06

(54) **CONSTRUCTION MANAGEMENT SYSTEM AND METHOD**

(71) Applicant: Hexagon Technology Center GmbH, 9435 Heerbrugg (CH)
(72) Inventor: PETTERSSON, Bo, L-1225 Luxembourg (LU)
(74) Representative: Kaminski Harmann

(57) **Abstract**

The invention pertains to a method of constructing a structure from a multitude of parts at a construction site (3), the method comprising a preparation process comprising determining an assembling sequence of a multitude of assembling steps for assembling the structure from the multitude of parts, determining, based on the assembling sequence, a multitude of structure conditions (31a-e), each structure condition describing a condition of the structure at a certain phase of the construction progress, and determining, for at least a plurality of the multitude of structure conditions, which temporary features (41, 42, 43, 44) need to be placed or installed temporarily at the construction site (3), wherein information about at least the assembling sequence and the needed temporary features are provided to an operator (6) at the construction site.

## Description

The present invention pertains to a construction management system and to a method of constructing a structure from a multitude of parts at a construction site, particularly using a building information model (BIM) for a preparation process for facilitating the construction.

In the art of general construction work such as building construction and civil engineering, important key factors are planning, progress observation, documentation and appropriate accounting. In many instances, those aspects are getting more and more complex and dynamic, in particular due to the many parties involved, fluctuating human and/or objective resources, increased complexity of the end results, tighter schedules, increased costs of human resources, etc. Work that was formerly planned and overseen by a single manager is nowadays too complex for a single person and a splitting between multiple people often miscarries at the thereby uprising interfaces.

Therefore, it has been tried to expand automation and computerization in this technical field. For example, in the art of building construction EP 2 629 210, JP 5489310, CN 103886139, US 2014/268064 or US 2014/192159 are giving examples of so-called BIM-System approaches.

Prior art approaches however still require skilled workforce. It would be advantageous to have a method and a system allowing even unskilled persons to build houses or other simple structures by themselves.

It is therefore an object of the present invention to provide an improved construction management system for the construction of a structure and an improved method of constructing a structure, wherein the structure can be easily assembled also by inexperienced workers.

It is another object to provide such a method, wherein the structure can be built faster and with fewer errors.

It is another object to provide such a method, wherein less space for storing the parts is needed at the construction site, and wherein unpacking the parts is less time-consuming, particularly wherein all parts and features needed for the construction are provided to the workers in the order in which they are needed.

It is a further object to provide such a method, wherein the parts are produced with high precision, particularly with higher precision than achievable if the parts are produced at the construction site.

At least one of these objects is achieved by the method according to claim 1, the construction management system according to claim 12 and/or the dependent claims of the present invention.

A first aspect of the invention relates to a method of constructing a structure from a multitude of parts at a construction site, the method comprising a preparation process comprising:
- determining an assembling sequence of a multitude of assembling steps for assembling the structure from the multitude of parts;
- determining, based on the assembling sequence, a multitude of structure conditions, each structure condition describing a condition of the structure at a certain phase of the construction progress; and
- determining, for at least a plurality of the multitude of structure conditions, temporary features which need to be placed or installed temporarily at the construction site.

Information about at least the assembling sequence and the needed temporary features are provided to an operator at the construction site.

According to one embodiment of the method,
- a building information model is used for the preparation process, wherein the building information model is stored on a central computing unit and provides data about the construction site and the structure, the data particularly comprising a digital model of the structure; and
- at least one of determining the assembling sequence, determining the structure conditions and determining the temporary features is performed on the basis of the data about the construction site and the structure, particularly based on the digital model.

According to another embodiment of the method, the preparation process further comprises
- determining, particularly based on a digital model of the structure, dimensions of parts needed for the construction of the structure;
- producing the needed parts according to the determined dimensions; and
- packing and shipping the produced parts to the construction site in accordance with the determined assembling sequence.

According to yet another embodiment of the method, the preparation process further comprises shipping the parts to the construction site in accordance with the assembling sequence, wherein a number of parts are packed in a first package in such a way that the parts need to be unpacked in a sequence that corresponds to the assembling sequence of the parts of the first package.

In one embodiment, the assembling sequence and the temporary features are provided to the operator by means of an assembly instruction, wherein the assembly instruction comprises instructions for each of the assembling steps and instructions for auxiliary steps related to the placing, installing or removal of the temporary features.

In one embodiment, the temporary features comprise support structures for providing support for the structure or parts thereof during one or more structure conditions, and/or safety measures to be placed at the construction site during one or more structure conditions, in particular wherein the safety measures comprise safety barriers. The auxiliary steps comprise support building steps for placing or installing the support structures at the structure, and/or barring steps for placing safety measures at the structure. Particularly, the auxiliary steps also comprise support removing steps for removing the support structures and/or de-barring steps for removing the safety measures, when the support structures and/or safety measures are no longer needed.

According to another embodiment, the method further comprises producing temporary features that are designed to fit specially for at least one structure condition, particularly for successive structure conditions or exactly one structure condition.

According to another embodiment, the method further comprises shipping needed parts together with temporary features to the construction site according to the assembling sequence. In particular, a number of parts and one or more temporary features are packed in a first package in such a way that the parts and the temporary features need to be unpacked in a sequence that corresponds to the assembling sequence of the parts and temporary features of the first package.

In another embodiment of the method, at least a first part of the multitude of parts and at least a first temporary feature are adapted to temporarily mount the temporary feature to the part. In particular, the first temporary feature is a support structure adapted to support the structure or a part thereof when mounted to the first part.

According to a further embodiment of the method, the parts comprise a multitude of studs of a plurality a different stud types comprising at least a bottom stud, a top stud and a standing stud, at least the bottom stud comprising positioning means, particularly embodied as referencing holes, for positioning the bottom studs on a base on the construction site, each stud comprising joints for connecting the stud with other studs, the joints comprising dovetail joints, wherein the assembling steps comprise positioning the bottom studs on the base and connecting the multitude of studs.

In one embodiment, the assembling sequence and information about the needed temporary features are provided to a portable computing device of the operator, the portable computing device comprising a display for providing graphical and/or text instructions to the operator and/or a loudspeaker for providing voice instructions to the operator.

In yet another embodiment, the preparation process is performed by a portable computing device of the operator, the portable computing device comprising a display for providing graphical and/or text instructions to the operator and/or a loudspeaker for providing voice instructions to the operator.

A second aspect of the invention relates to a construction management system for preparing and managing the construction of a structure at a construction site from a multitude of parts, the system comprising a computer system having a data storage to store a model of the structure and an algorithm. Using said algorithm, the system is adapted to perform a preparation process for the construction comprising
- determining, based on the stored model, an assembling sequence of a multitude of assembling steps for assembling the structure from the multitude of parts;
- determining, based on the assembling sequence, a multitude of structure conditions, each structure condition describing a condition of the structure at a certain phase of the construction progress;
- determining, for at least a plurality of the multitude of structure conditions, which temporary features need to be placed or installed temporarily at the construction site; and
- providing information about at least the assembling sequence and the needed temporary features to an operator at the construction site.

According to one embodiment, the system comprises a portable computing device situated at the construction site and comprising means for providing the information about at least the assembling sequence and the needed temporary features to the operator, said means comprising a display for providing graphical and/or text instructions to the operator and/or a loudspeaker for providing voice instructions to the operator, in particular wherein the preparation process is performed by the portable computing device.

According to one embodiment, the system is adapted to perform the method of the first aspect of the invention.

The invention also relates to a computer programme product comprising programme code which is stored on a machine-readable medium, or being embodied by an electromagnetic wave comprising a programme code segment, and having computer-executable instructions for performing, at least the following steps of the method according to the first aspect of the invention:
- determining an assembling sequence of a multitude of assembling steps for assembling the structure from the multitude of parts;
- determining, based on the assembling sequence, a multitude of structure conditions, each structure condition describing a condition of the structure at a certain phase of the construction progress; and
- determining, for at least a plurality of the multitude of structure conditions, which temporary features need to be placed or installed temporarily at the construction site.

The invention in the following will be described in detail by referring to exemplary embodiments that are accompanied by figures, in which:
- Fig. 1: shows the components of an exemplary embodiment of a construction management system according to the invention;
- Figs. 2a-b: show examples of an assembling sequence and a corresponding assembling instruction;
- Figs. 3a-e: shows different structure conditions at five states of the construction of a structure;
- Figs. 4a-b: show flow-charts illustrating exemplary embodiments of a method for preparing a construction of a structure;
- Figs. 5a-b: show a construction site with an exemplary set of parts for assembling a structure comprising a plurality of different stud types;
- Figs. 6a-b: show a bottom stud as a first example for a stud type of Figures 5a-b;
- Figs. 7a-b: show a top stud as a second example for a stud type of Figures 5a-b;
- Figs. 8a-b: show a standing stud as a third example for a stud type of Figures 5a-b; and
- Fig. 9: shows the different stud types.

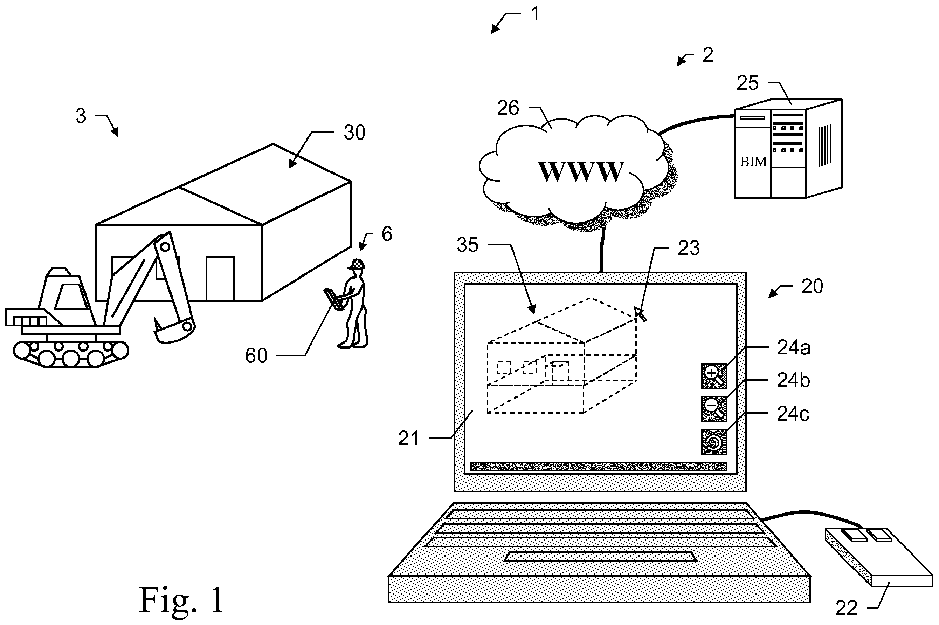

In Figure 1 a construction management system 1 is depicted for preparing and managing the construction of a building (house 30) or other structure at a construction site 3.

The system 1 comprises a computer system 2 comprising one or more display units 20 and a server computer 25 that are connected by means of an internet connection 26. In the shown example, the display unit 20 is a laptop comprising a display 21 (output means) and a mouse 22 (input means). On the display 21 a graphical user interface (GUI) is displayed with a mouse cursor 23 and several buttons 24a-c.

In the GUI, a three-dimensional model 35 of the building 30 is visualized. A user (not shown) of the laptop is enabled to change the view on the model 35 by moving the cursor 23 on one of the GUI buttons 24a-c and clicking on a button of the mouse 22 (e. g. rotate the model, zoom in or out). The model, e. g., can be a computer aided design (CAD) model, comprising information about all needed parts for assembling the building.

Instead of a house 30, of course also other structures can be assembled, e. g. bridges. Further, instead of a single server computer 25, a cluster of servers, a cloud or similar means can be used.

According to embodiments of the invention, the system 1 comprises software to determine, based on the model 35, a sequence of steps for assembling the building from the multitude of needed parts (assembling sequence). The software is then adapted to determine, based on this assembling sequence, a multitude of different structure conditions, i.e. conditions of the yet unfinished structure at a certain point or phase during the construction progress. For these structure conditions it is then determined, by means of the software, which temporary features are needed to be positioned or erected at the construction site 3. These temporary features comprise safety measures, e. g. signs (warnings, information, prohibitions etc.) or safety barriers such as hoardings. The assembling sequence together with information about the temporary features can then be provided to an operator 6 (e. g. a foreman or supervisor) at the construction site 3. For instance, this information can be sent to a mobile electronic device 60 that is embodied as a portable computing device. In one embodiment, it is also possible to perform the necessary calculations directly on the mobile device 60, e. g. using a smartphone app.

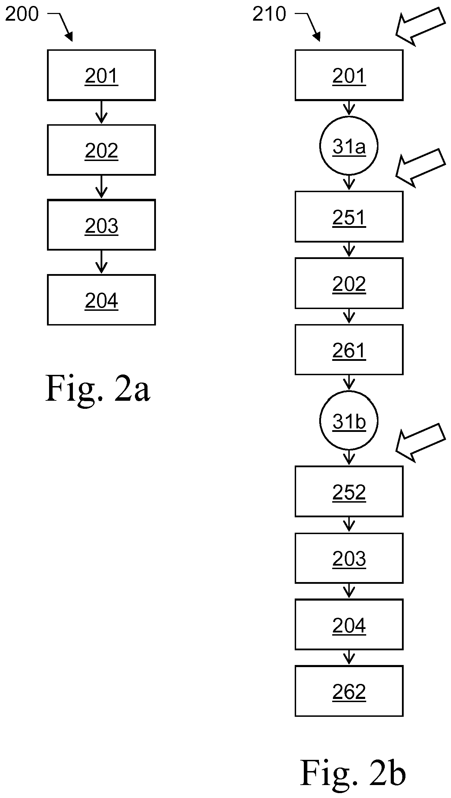

Figure 2a illustrates an assembling sequence 200 for the construction of a structure. In this example, the assembling sequence 200 comprises four assembly steps 201, 202, 203, 204 that are performed successively. After completion of step 204, the structure is completed.

Figure 2b illustrates the steps of an assembling instruction 210 that has been created based on the assembling sequence of Figure 2a. According to the invention, based on the assembling sequence, significant structure conditions are determined, each of which describing a state or situation of the structure 30 at a certain phase during the progress of the construction. Although, theoretically, every single change of the structure results in a new condition, not every condition is considered to be significant or relevant. Particularly, only those states or situations may be considered as structure conditions which make at least one auxiliary step necessary.

In the shown example there are two relevant structure conditions 31a, 31b identified: a first structure condition 31a after the first assembly step 201 and a second structure condition 31b after the second assembly step 202.

For the first structure condition 31a, an auxiliary step 251 is determined to be necessary. For instance, this step 251 may comprise setting up a temporary support structure before continuing the construction with the next assembly step 202. With the completion of this step, the second structure condition 31b is reached. In the shown example, it has been determined that two auxiliary steps are necessary at this point. For example, on the one hand, in step 261 the previously set up support structure is removed again, e. g. as otherwise the support would prevent continuing with the next steps. On the other hand, a scaffold may have to be erected in step 252 so that the construction itself can continue with consecutive assembling steps 203 and 204. The necessary parts for assembling the structure can preferably be delivered to the construction site in small portions (here indicated by the three arrows), i.e. when one of the identified structure conditions has been reached. This advantageously reduces the necessary space at the construction site.

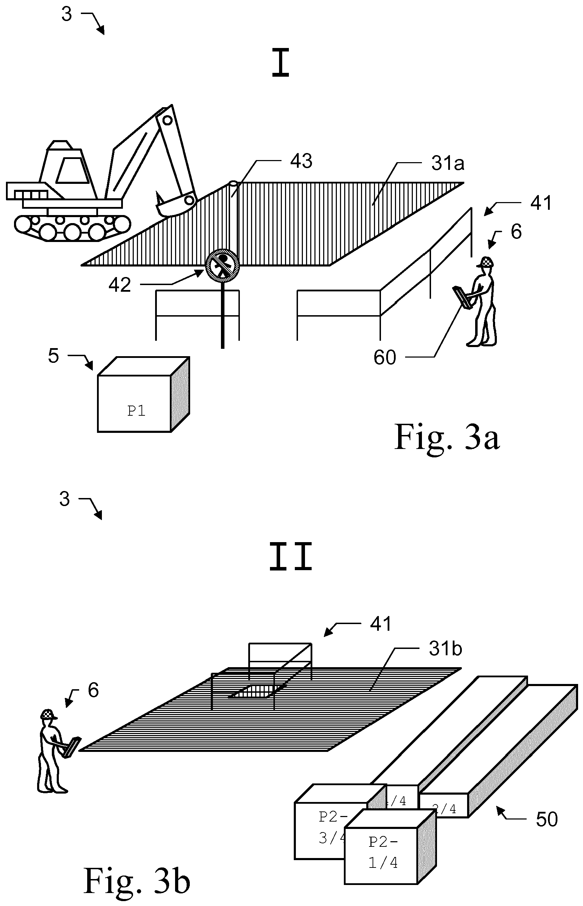

In Figures 3a-e, a construction site 3 is shown with five different phases or situations (I, II, III, IV and V) of a construction of a house 30 (as an example of a structure). In each situation, the house that is to be assembled is in a certain structure condition 31a-e. An operator 6 receives information about the assembling sequence and about temporary features 41-44 that are needed at each structure condition 31a-e on his mobile device 60. The operator 6 can be a foreman or a supervisor of the construction site 3. However, especially if the information is provided as a step-by-step assembly instruction, advantageously the operator 6 can be any unskilled or inexperienced person as well.

Depending on the number of workers the work can be divided into work packages. Assembly instructions for each work package can thus be provided to one operator per workgroup.

Optionally, providing the assembly instructions may comprise providing an augmented reality on the display, i.e. showing in a live image of the construction site where the next part has to be placed. Additionally, the assembly instructions can be provided as a voice output.

Optionally, if the skill of the operator 6 is known, the assembly instructions can be adapted to the skill. For instance, the instructions can be more detailed for unskilled workers. In one embodiment, the operator is enabled to select his own skill level. Alternatively or additionally, by a combination of machine learning and quality control, the skill level can be estimated and adjusted automatically.

Single packages 5 or batches 50 of packages with the needed parts are delivered continuously based on the assembling sequence. Packages and parts are labelled with a unique ID. Instead of using packages, the parts of course can also be provided on pallets or in bulk. Preferably, the parts are provided according to a determined assembling sequence. This means that, preferably, the single packages of a batch 50 are numbered so that those parts that are needed first are in the first package, and those parts that are needed last are in the last package. Moreover, preferably, all packages are packed in such a way that the parts that are needed first can be unpacked first, e. g. lying on top inside of the package.

Preferably, the packages 5, 50 also may comprise the needed temporary features 41-44, which also can be provided according to the determined assembling sequence, e. g. packed in the same packages as the parts that are needed for the construction itself.

Alternatively, the parts are manufactured on site, e. g. from raw material provided by means of packages 5, 50 that are packed and delivered as described above. This solution facilitates matching the just-in-time deliveries. It also allows a higher flexibility, e. g. in case a part is damaged during the assembly and needs to be replaced. One example of such a mobile workshop is described in the European patent application EP16184399.0.

Figure 3a shows the first phase I. The condition 31a of the house in this example is an excavation pit for a basement of the house. A package 5 is provided comprising temporary features that have been determined to be necessary for this structure condition 31a. In this example, the temporary features comprise safety barriers 41, signage 42 and supports 43 for the pit. The information provided to the operator 6 comprises information where, when and how to install these features 41, 42, 43. Advantageously, the information can be provided as a step-by-step instruction wherein the construction steps and the feature installation steps are provided in the order in which they should be performed to ensure on-the-job and construction site safety.

Figure 3b shows the second phase II. The structure condition 31b is an excavation pit that has been covered and comprises a hole where stairs to the basement will be installed later. It is thus necessary to place safety barriers 41 around this hole as temporary features for this and following structure conditions. A batch 50 of packages has been delivered to the construction site 3 providing parts and temporary features for this and following construction phases.

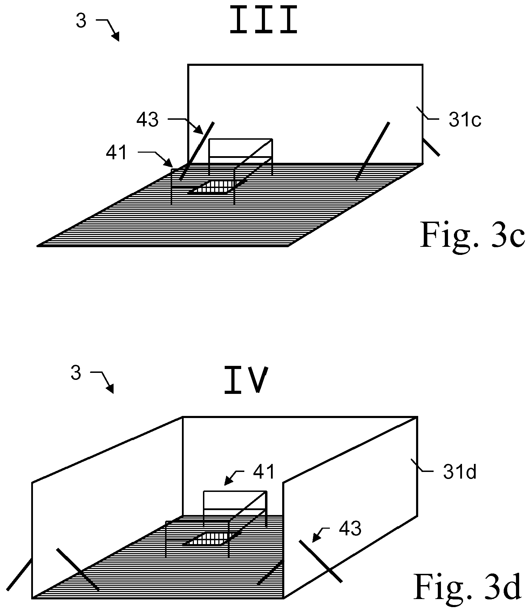

Figures 3c and 3d show the third phase III and the fourth phase IV, respectively. The house in these structure conditions 31c and 31d comprises the basement and one or more walls. The temporary features in these phases comprise additional supports 43 for the walls. Another example for temporary features relates to the construction of windows: The instructions for the construction of windows may comprise the temporary installation of safety bars (not shown here). These can be provided to fit in the window hole and remain there until the construction around the window is stable.

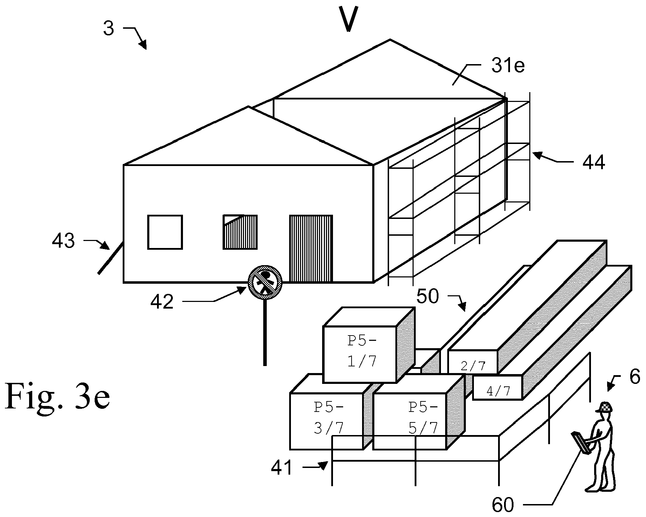

Figure 3e shows the fifth phase V of the construction. In this structure condition 31e the house's walls are erected and the roof is to be added. A batch 50 of packages has been delivered to the construction site 3 providing parts and temporary features for this construction phase.

The operator 6 receives information output on his mobile electronic device 60 comprising information about the following assembly steps and about the necessary auxiliary steps. The latter comprise steps of placing the temporary features 41-44 needed at this structure condition 31e. Here, these comprise safety barriers 41, signage 42, supports 43 and scaffolding 44.

In one embodiment, at one or more structure conditions 31a-e the partially assembled structure is measured, e. g. using a laser scanner or handheld electronic range meters. Based on the measured dimensions, differences of the real condition to the model can be determined. Dimensions of parts or temporary features 41-44 that are needed at later phases of the construction can thus be adapted before production and/or shipping.

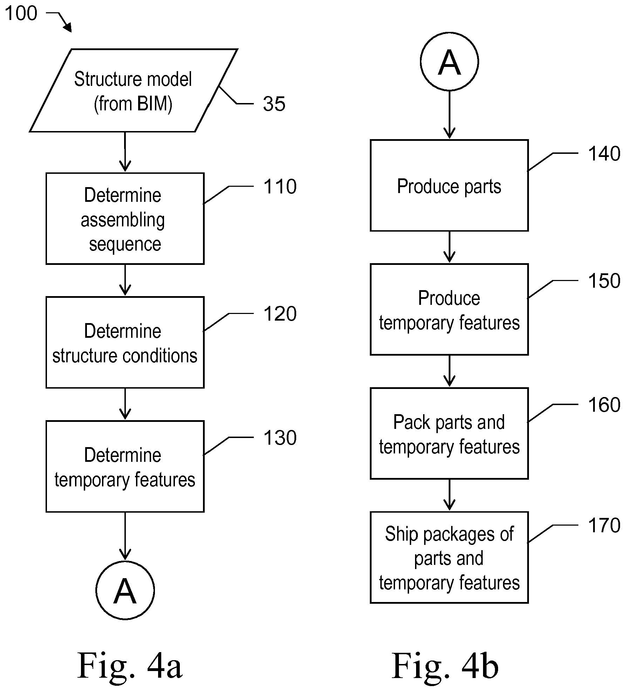

Figures 4a and 4b illustrate an exemplary embodiment of a method 100 according to the invention. A method 100 of constructing a structure comprises a preparation process with the steps illustrated in Figure 4a.

In a first step 110, the assembling sequence is determined based on a model 35 of the structure, e. g. provided by a BIM. For instance, this model can be a CAD model. In a second step 120, based on the determined assembling sequence, a number of structure conditions are determined. In a third step 130, it is determined which temporary features are needed at each of the number of structure conditions. The information determined in steps 110, 120 and 130 can then be provided to an operator at the construction site, e. g. electronically transmitted to a mobile device.

The information can further be used to perform additional steps as illustrated in Figure 4b. These steps comprise producing the parts needed for the construction (step 140) in accordance with the assembly sequence, e. g. first needed parts before last needed parts. Another step is producing the temporary features that have been found to be needed (step 150).

Advantageously, both the parts and the temporary features can be produced in an order that allows providing them according to the assembly sequence, e. g. a first lot of parts and temporary features can be provided for a first structure condition, a second lot can be provided for a second structure condition etc.

In the following steps, the produced parts and features are packed (step 160) and shipped to the construction site (step 170). The packing 160 preferably is performed in such a way that the parts and temporary features that are needed first can be unpacked first, e. g. lying on top inside of a package. The shipping 170 preferably is performed in such a way that the packages arrive in the order in which their contents are needed and not (long) before these are needed. The packages can be numbered and opening the packages can be a part of the assembly instructions.

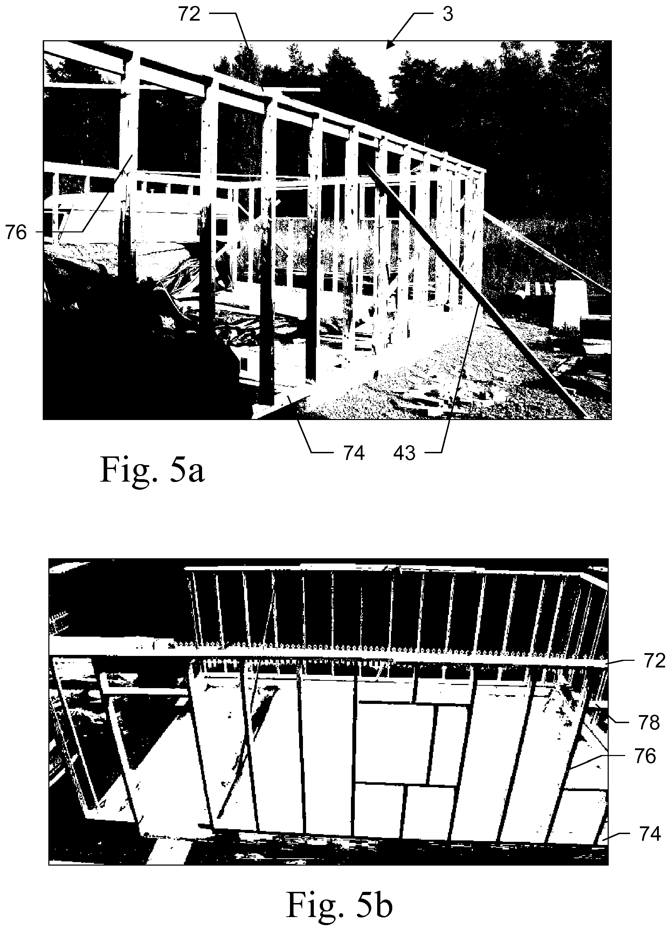

With respect to the following figures, a housing construction system is described that is especially applicable with the method described above. Figures 5a and 5b depict a construction site 3 with a house under construction. The house is assembled from wooden studs 72, 74, 76, 78 that have been produced remotely with positioning features and joints for easy assembly at the construction site 3. The studs have been shipped together with temporary supports 43 and are to be assembled according to a provided assembly instruction. When the studs have been assembled, boards will be provided and assembled according to the assembly instruction.

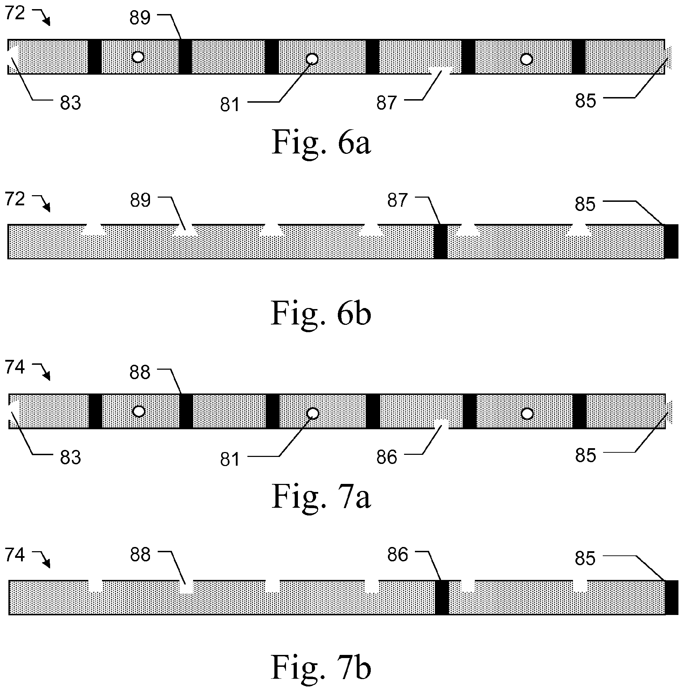

The different stud types are described in more detail in Figures 6a-b, 7a-b, 8a-b and 9. The studs can be made of wood, plastic or metal, such as steel or aluminium. They can also be assembled from more than one material.

In Figures 6a and 6b a bottom stud 72 is depicted in a top view (Figure 6a) and in a side view (Figure 6b). The bottom stud 72 comprises reference holes 81 as positioning means, allowing positioning the studs with millimetre precision on a base. The stud 72 further comprises joints 83, 85, 87, 89 for easy assembly with other studs. It has been found that joints in the form of dovetail or swallowtail joints are most efficient. However, the joints can also consist of other tongue and groove connections.

In Figures 7a and 7b a top stud 74 is depicted in a bottom view (Figure 7a) and in a side view (Figure 7b). Also the top stud 74 comprises reference holes 81 as positioning means. The stud 74 further comprises joints 83, 85, 86, 88 for easy assembly with other studs.

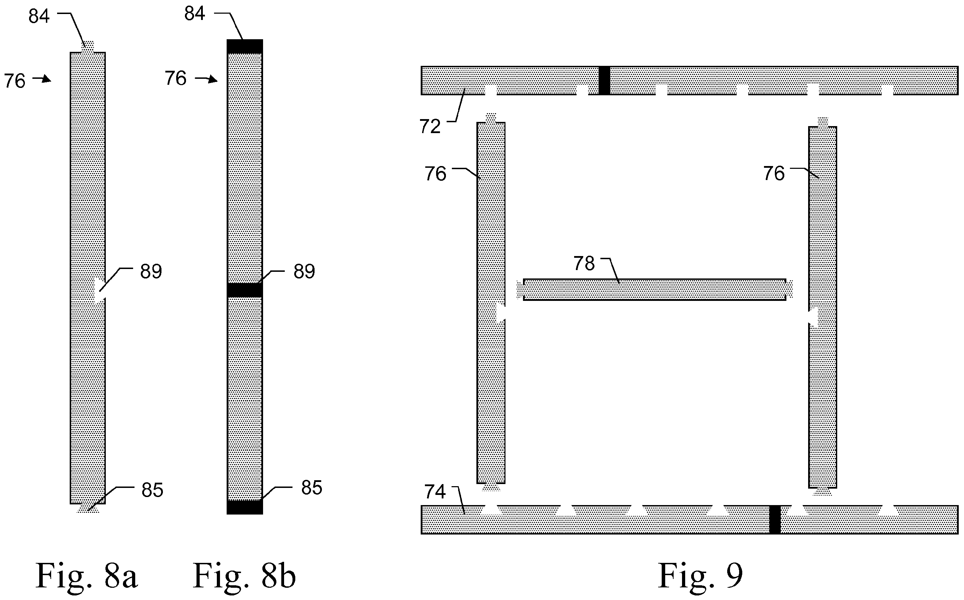

In Figures 8a and 8b a standing stud 76 is depicted in a front view (Figure 8a) and in a side view (Figure 8b). The stud 76 comprises joints 84, 85, 89 for easy assembly with other studs.

Figure 9 shows different stud types 72, 74, 76, 78 together, illustrating how these can be connected to form the housing structure of Figures 5a-b. Because of the joints, advantageously the structure can be assembled without the need of screws or nails.

After the stud structure has been assembled, boards or panels (not shown here), e. g. made of wood or drywall, can be mounted to the structure. These can be produced and shipped to the construction site in the same way as the studs.

Due to the positioning features 81 provided in the studs 72, 74, the studs can be positioned with millimetre accuracy at the construction site. Thus, once a base is positioned, there will be no need for further measurements.

Additionally, fastenings for electricity, water and ventilation can be built in with high precision. Studs and boards can have holes for cables, pipes etc. built in.

In one embodiment, the studs can be manufactured on site, e. g. from raw material provided by means of packages 5, 50 that are packed and delivered with respect to Figures 3a-e. This solution facilitates matching the just-in-time deliveries. It also allows a higher flexibility, e. g. in case a part is damaged during the assembly and needs to be replaced. One example of such a mobile workshop is described in the European patent application EP16184399.0. In the example of the described housing construction system, the raw material can be stud brutes having e. g. the shapes of the different stud types. The mobile workshop may comprise machines that are especially adapted to cut these brutes to the needed length and provide them with the necessary joints and reference holes. A 3D-printing device can be provided additionally to provide smaller parts. In particular, the mobile workshop can operate completely or partially automatically, for instance if information about the needed parts for assembling the building and their assembling order is provided from a server computer (see Figure 1) to a computing device of the mobile workshop.

Although the invention is illustrated above, partly with reference to some preferred embodiments, it must be understood that numerous modifications and combinations of different features of the embodiments can be made. All of these modifications lie within the scope of the appended claims.

## Claims

1. Method (100) of constructing a structure (30) from a multitude of parts at a construction site (3), the method (100) comprising a preparation process comprising:
- determining (110) an assembling sequence (200) of a multitude of assembling steps (201-204) for assembling the structure (30) from the multitude of parts;
- determining (120), based on the assembling sequence, a multitude of structure conditions (31a-e), each structure condition describing a condition of the structure (30) at a certain phase (I-V) of the construction progress; and
- determining (130), for at least a plurality of the multitude of structure conditions (31a-e), temporary features (41, 42, 43, 44) which need to be placed or installed temporarily at the construction site (3),
wherein information about at least the assembling sequence (200) and the needed temporary features (41, 42, 43, 44) are provided to an operator (6) at the construction site (3).

2. Method (100) according to claim 1,
**characterized in that**
- a building information model is used for the preparation process, wherein the building information model is stored on a central computing unit (25) and provides data about the construction site (3) and the structure (30), the data particularly comprising a digital model (35) of the structure (30); and
- at least one of determining (110) the assembling sequence (200), determining (120) the structure conditions (31a-e) and determining (130) the temporary features (41-44) is performed on the basis of the data about the construction site (3) and the structure (30), particularly based on the digital model (35).

3. Method (100) according to claim 1 or claim 2,
**characterized in that**
the preparation process further comprises
- determining, particularly based on a digital model (35) of the structure (30), dimensions of parts needed for the construction of the structure (30);
- producing (140) the needed parts according to the determined dimensions; and
- packing (150) and shipping (160) the produced parts to the construction site (3) in accordance with the determined assembling sequence (200).

4. Method (100) according to any one of the preceding claims,
**characterized in that**
the preparation process further comprises shipping (160) the parts to the construction site (3) in accordance with the assembling sequence, wherein a number of parts are packed in a first package (5) in such a way that the parts need to be unpacked in a sequence that corresponds to the assembling sequence of the parts of the first package (5).

5. Method (100) according to any one of the preceding claims,
**characterized in that**
the assembling sequence (200) and the temporary features (41, 42, 43, 44) are provided to the operator (6) by means of an assembly instruction (210), wherein the assembly instruction (210) comprises instructions for each of the assembling steps (201-204) and instructions for auxiliary steps (251, 252, 261, 262) related to the placing, installing or removal of the temporary features (41, 42, 43, 44).

6. Method (100) according to claim 5,
**characterized in that**
the temporary features comprise
- support structures (43) for providing support for the structure (30) or parts thereof during one or more structure conditions (31a-e); and/or
- safety measures (41, 42) to be placed at the construction site (3) during one or more structure conditions (31a-e), in particular wherein the safety measures comprise safety barriers (41),
wherein the auxiliary steps (251, 252, 261, 262) comprise support building steps for placing or installing the support structures (43) at the structure (30), and/or barring steps for placing safety measures (41, 42) at the structure, particularly wherein the auxiliary steps (251, 252, 261, 262) also comprise support removing steps for removing the support structures (43) and/or de-barring steps for removing the safety measures (41, 42).

7. Method (100) according to any one of the preceding claims,
**characterized in that**
the method further comprises
- producing temporary features (41-44) that are designed to fit specially for at least one structure condition (31a-e), particularly for successive structure conditions or exactly one structure condition; and/or
- shipping (160) needed parts together with temporary features (41-44) to the construction site (3) according to the assembling sequence, particularly wherein a number of parts and one or more temporary features (41-44) are packed (150) in a first package (5) in such a way that the parts and the temporary features need to be unpacked in a sequence that corresponds to the assembling sequence of the parts and temporary features (41-44) of the first package (5).

8. Method (100) according to any one of the preceding claims,
**characterized in that**
at least a first part of the multitude of parts and at least a first temporary feature (41-44) are adapted to temporarily mount the temporary feature to the part, in particular wherein the first temporary feature is a support structure (43) adapted to support the structure (30) or a part thereof when mounted to the first part.

9. Method (100) according to claim 3,
**characterized in that**
the parts comprise a multitude of studs (72, 74, 76, 78) of a plurality a different stud types comprising at least a bottom stud (72), a top stud (74) and a standing stud (76), at least the bottom stud (72) comprising positioning means, particularly embodied as referencing holes, for positioning the bottom studs (72) on a base on the construction site (3), each stud comprising joints (83, 84, 85, 87, 88, 89) for connecting the stud with other studs, the joints comprising dovetail joints, wherein the assembling steps (201-204) comprise positioning the bottom studs (72) on the base and connecting the multitude of studs (72, 74, 76, 78).

10. Method (100) according to any one of the preceding claims,
**characterized in that**
the assembling sequence (200) and the needed temporary features (41, 42, 43, 44) are provided to a portable computing device (60) of the operator (6), the portable computing device (60) comprising
- a display for providing graphical and/or text instructions to the operator (6); and/or
- a loudspeaker for providing voice instructions to the operator (6).

11. Method (100) according to any one of the preceding claims,
**characterized in that**
the preparation process is performed by a portable computing device (60) of the operator (6), the portable computing device (60) comprising
- a display for providing graphical and/or text instructions to the operator (6); and/or
- a loudspeaker for providing voice instructions to the operator (6).

12. Construction management system (1) for preparing and managing the construction of a structure (30) at a construction site (3) from a multitude of parts, the system comprising a computer system (2) having a data storage to store a model (35) of the structure (30) and an algorithm,
**characterized in that**
using the algorithm, the system (1) is adapted to perform a preparation process for the construction comprising
- determining, based on the stored model (35), an assembling sequence (200) of a multitude of assembling steps (201-204) for assembling the structure (30) from the multitude of parts;
- determining, based on the assembling sequence, a multitude of structure conditions (31a-e), each structure condition describing a condition of the structure (30) at a certain phase of the construction progress;
- determining, for at least a plurality of the multitude of structure conditions, which temporary features (41, 42, 43, 44) need to be placed or installed temporarily at the construction site (3); and
- providing information about at least the assembling sequence (200) and the needed temporary features (41, 42, 43, 44) to an operator (6) at the construction site (3).

13. Construction management system (1) according to claim 12,
**characterized in that**
the system (1) comprises a portable computing device (60) situated at the construction site (3) and comprising means for providing the information about at least the assembling sequence (200) and the needed temporary features (41, 42, 43, 44) to the operator (6), the means comprising a display for providing graphical and/or text instructions to the operator (6) and/or a loudspeaker for providing voice instructions to the operator (6), in particular wherein the preparation process is performed by the portable computing device (60).

14. Construction management system (1) according to claim 12 or claim 13, wherein the system is adapted to perform the method of any one of claims 1 to 11.

15. Computer programme product comprising programme code which is stored on a machine-readable medium, or being embodied by an electromagnetic wave comprising a programme code segment, and having computer-executable instructions for performing, at least the following steps of the method (100) according to one of the claims 1 to 11:
- determining (110) an assembling sequence (200) of a multitude of assembling steps (201-204) for assembling the structure (30) from the multitude of parts;
- determining (120), based on the assembling sequence, a multitude of structure conditions (31a-e), each structure condition describing a condition of the structure (30) at a certain phase of the construction progress; and
- determining (130), for at least a plurality of the multitude of structure conditions, which temporary features (41, 42, 43, 44) need to be placed or installed temporarily at the construction site (3).
